(19) Europäisches Patentamt
European Patent Office
Office européen des brevets

(11) **EP 3 596 661 B1**

(12) **EUROPEAN PATENT SPECIFICATION**

(45) Date of publication and mention
of the grant of the patent:
**12.02.2025   Bulletin 2025/07**

(21) Application number: **18726145.8**

(22) Date of filing: **22.05.2018**

(51) International Patent Classification (IPC):
**G06N 3/044** *(2023.01)*     **G06N 3/0455** *(2023.01)*
**G06N 3/092** *(2023.01)*     **G06N 3/088** *(2023.01)*
**G06N 3/006** *(2023.01)*

(52) Cooperative Patent Classification (CPC):
**G06N 3/006; G06N 3/044; G06N 3/0455;
G06N 3/088; G06N 3/092**

(86) International application number:
**PCT/EP2018/063281**

(87) International publication number:
**WO 2018/211140 (22.11.2018 Gazette 2018/47)**

(54) **DATA EFFICIENT IMITATION OF DIVERSE BEHAVIORS**

DATENEFFIZIENTE IMITATION VON DIVERSEN VERHALTEN

IMITATION EFFICACE DE DONNÉES DE COMPORTEMENTS DIVERS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.05.2017   US 201762508972 P**

(43) Date of publication of application:
**22.01.2020   Bulletin 2020/04**

(73) Proprietor: **DeepMind Technologies Limited**
**London EC4A 3TW (GB)**

(72) Inventors:
• **WAYNE, Gregory Duncan**
**London N1C 4AG (GB)**
• **MEREL, Joshua**
**London N1C 4AG (GB)**
• **WANG, Ziyu**
**London N1C 4AG (GB)**
• **HEESS, Nicolas Manfred Otto**
**London N1C 4AG (GB)**
• **FREITAS, Joao Ferdinando**
**London N1C 4AG (GB)**
• **REED, Scott Ellison**
**London N1C 4AG (GB)**

(74) Representative: **Marks & Clerk GST**
**1 New York Street**
**Manchester M1 4HD (GB)**

(56) References cited:
• **YUNZHU LI ET AL: "Inferring The Latent
Structure of Human Decision-Making from Raw
Visual Inputs", ARXIV.ORG, CORNELL
UNIVERSITY LIBRARY, 201 OLIN LIBRARY
CORNELL UNIVERSITY ITHACA, NY 14853, 26
March 2017 (2017-03-26), XP080759704**
• **JONATHAN HO ET AL: "Generative Adversarial
Imitation Learning", ARXIV.ORG, CORNELL
UNIVERSITY LIBRARY, 201 OLIN LIBRARY
CORNELL UNIVERSITY ITHACA, NY 14853, 10
June 2016 (2016-06-10), XP080707360**
• **JONATHAN HO ET AL: "Model-Free Imitation
Learning with Policy Optimization", ARXIV.ORG,
CORNELL UNIVERSITY LIBRARY, 201 OLIN
LIBRARY CORNELL UNIVERSITY ITHACA, NY
14853, 27 May 2016 (2016-05-27), XP080806510**
• **AARON VAN DEN OORD ET AL: "WaveNet: A
Generative Model for Raw Audio", ARXIV.ORG,
CORNELL UNIVERSITY LIBRARY, 201 OLIN
LIBRARY CORNELL UNIVERSITY ITHACA, NY
14853, 12 September 2016 (2016-09-12),
XP080725972**

- **M. MIRZA, S. OSINDERO: "Conditional generative adversarial nets", ARXIV:1411.1784V1, 6 November 2014 (2014-11-06), XP055501175, Retrieved from the Internet <URL:https://arxiv.org/abs/1411.1784v1> [retrieved on 20180818]**

- **YAN DUAN ET AL: "One-Shot Imitation Learning", ARXIV.ORG, CORNELL UNIVERSITY LIBRARY, 201 OLIN LIBRARY CORNELL UNIVERSITY ITHACA, NY 14853, 21 March 2017 (2017-03-21), XP080758699**

**Description**

BACKGROUND

This specification relates to methods and systems for training a neural network.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step. An example of a recurrent neural network is a long short term (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network.

Yunzhu Li et al.: "Inferring The Latent Structure of Human Decision-Making from Raw Visual Inputs", published on 26-03-2017, https://arxiv.org/abs/1703.08840v1, describes an extension to the Generative Adversarial Imitation Learning method that can infer the latent structure of human decision-making in an unsupervised way. A component is introduced which maximizes the mutual information between latent structure and trajectories, similar to InfoGAN (Chen et ai., 2016), resulting in a policy where low-level actions can be controlled through high-level latent variables.

Jonathan Ho, Stefano Ermon: "Generative Adversarial Imitation Learning", published on 10-06-2016, https://arxiv.org/abs/1606.03476, describes model-free imitation learning algorithms for finding a parameterized stochastic policy that performs at least as well as an expert policy on an unknown cost function, based on sample trajectories from the expert.

Jonathan Ho et al.: "Model-Free Imitation Learning with Policy Optimization", published on 26-05-2016, https://arxiv.org/abs/1605.08478, describes an extension to Generative Adversarial Imitation Learning method that can infer the latent structure of human decision-making in an unsupervised manner.

SUMMARY

This specification describes how a system implemented as computer programs on one or more computers in one or more locations can adjust the parameters of a neural network used to select actions to be performed by an agent interacting with an environment in response to received observations. This is generally referred to as "training" a neural network.

Implementations described herein utilize a combination of variational auto encoding and reinforcement learning to train the system to imitate the behavior of a training set of trajectories.

In a reinforcement learning system data may be output for selecting actions to perform, under control of the system. In order for the agent to interact with the environment, the system receives data characterizing the current state $x_t$ of the environment $\varepsilon$ at time t and selects an action $a_t$ to be performed by the agent in response to the received data according to its policy $\pi$. A policy $\pi$ is a mapping from states to actions. In return, the agent receives a scalar reward $r_t$. The return $R_t = \sum_{k=0}^{\infty} \gamma^k r_{t+k}$ is the total accumulated reward from time step t with discount factor $\gamma^k \in (0,1]$. The goal of the agent is to maximize the expected return from each state. Data characterizing a state of the environment will be referred to in this specification as an observation.

In accordance with the claimed invention, the environment is a real-world environment and the agent is a mechanical agent interacting with the real-world environment. For example, the agent may be a robot interacting with the environment to accomplish a specific task. As another example, the agent may be an autonomous or semi-autonomous vehicle navigating through the environment. In these implementations, the actions may control inputs to control the robot or the autonomous vehicle.

According to an aspect of the present disclosure there is provided a method for training a policy generator neural network according to claim 1.

In general, one innovative aspect of the subject matter described in this specification can be embodied in a method for training a neural network used to select actions to be performed by an agent interacting with an environment. The method comprises obtaining data identifying a set of trajectories, each trajectory comprising a set of observations characterizing a set of states of the environment and corresponding actions performed by another agent in response to the states and obtaining data identifying an encoder that maps the observations onto embeddings for use in determining a set of imitation trajectories. The method further comprises determining, for each trajectory, a corresponding embedding by applying the encoder to the trajectory, determining a set of imitation trajectories by applying a policy defined by the neural network to the embedding for each trajectory, and adjusting parameters of the neural network based on the set of trajectories, the set of imitation trajectories and the embeddings.

The set of imitation trajectories may be trajectories comprising state action pairs that aim to copy the set of (training) trajectories. Each embedding can comprise a set of latent variables that can be decoded to determine a set of imitation trajectories. Once the parameters for the neural network have been adjusted (once the neural network has been trained) the neural network can imitate behavior that is observed in the set of (training) trajectories.

By adjusting the parameters of the neural network based on embeddings (latent variables) determined via an encoder, the resulting neural network is better able to imitate the behavior of the set of trajectories in a robust manner over a wider range of behaviors. As a wider range of behaviors are modelled by the neural network, a smaller number of training trajectories are required to train the neural network. Accordingly, this method allows for one-shot learning. Furthermore, this method allows for re-use in compositional controllers.

The methods described herein provide improved training compared to, for instance, behavioral cloning. Behavioral cloning suffers from inefficiencies stemming from its sequential nature and an inability to correct errors effectively without the training data set demonstrating appropriate correcting behaviors. In contrast, by training the neural network using an encoder that has been trained on the training trajectories, the methods described herein are better able to learn multiple behaviors robustly from small training datasets. Accordingly, the methods described herein are more efficient and effective at training neural networks.

Adjusting parameters of the neural network uses values output from a discriminator that have been conditioned using the embeddings. Conditioning the discriminator values using the latent variables results in the neural network becoming more robust and exhibiting a greater diversity of modelled behaviors. More specifically, conditioning the discriminator values also allows for the generation of a variety of reward functions, each of them tailored to imitating a different trajectory. The increased diversity of the reward functions provides a more stable means for training the neural network, as the method will not collapse into one particular mode. This allows for a greater diversity in the behaviors that are modelled.

Adjusting the parameters of the neural network comprises determining a set of parameters that improves the return from a reward function, the reward function being based on a value output from the discriminator. Accordingly, the neural network may be trained via reinforcement learning using a reward function that is based on the discriminator (that is, a variety of reward functions that are dependent on the discriminator values for the corresponding trajectories). As the discriminator has been conditioned using the latent variables, the reward function is also dependent on the latent variables that have been encoded from the set of trajectories. This leads to increased robustness of the neural network. The parameters may be determined via a stochastic gradient ascent or descent process. More specifically, the parameters may be determined via a trust region policy optimization process.

More specifically, the reward function may be:

$$r_t^j(x_t^j, a_t^j | z_j) = -\log(1 - D_\psi(x_t^j, a_t^j | z_j))$$

wherein:

$r_t^j(x_t^j, a_t^j | z_t^j)$ is the $t^{th}$ reward for the $j^{th}$ trajectory $\tau_j = \{x_1^j, a_1^j, ..., x_{T_j}^j, a_{T_j}^j\}$;

xt is the $t^{th}$ state from a total of $T_j$ state action pairs for the $j^{th}$ trajectory;

at is the $t^{th}$ action from a total of $T_j$ state action pairs for the $j^{th}$ trajectory;

$z^j$ is the embedding calculated by applying the encoder q to the $j^{th}$ trajectory, $z^j \sim q\left(\cdot \left| x_{1:T_j}^j\right.\right)$; and

$D_\psi$ is the output of the discriminator.

The method may further comprise updating a set of discriminator parameters based on the embeddings. This allows the method to be iteratively repeated to further improve the neural network.

The method may comprise iteratively: updating the parameters of the neural network based on the discriminator;

updating the discriminator parameters based on the set of trajectories, the set of imitation trajectories and the embeddings; and updating the embeddings and imitation trajectories using the updated neural network, until an end condition is met. The end condition may be a maximum number of iterations or maximum amount of time allocated for training the neural network. The method may further comprise, in response to the end condition being met, updating the parameters of the neural network based on the updated discriminator and outputting the parameters of the neural network.

Updating the set of discriminator parameters may utilize a gradient ascent method. More specifically, updating the set of discriminator parameters may comprise implementing:

$$\min_{\theta} \max_{\psi} \mathbb{E}_{\tau_i \sim \pi_E} \left\{ \mathbb{E}_{q(z|x_{1:T_i}^i)} \left[ \frac{1}{T_i} \sum_{t=1}^{T_i} \log D_{\psi}(x_t^i, a_t^i|z) + \mathbb{E}_{\pi_{\theta}} \left[ \log(1 - D_{\psi}(x, a|z)) \right] \right] \right\}$$

wherein:

$D_{\psi}$ is the discriminator function;
$\psi$ is the set of discriminator parameters;
$\pi_{\theta}$ is the policy of the neural network;
$\theta$ is the set of parameters for the neural network;
$\pi_E$ represents the expert policy that generated the set of trajectories;
$q$ is the encoder;
$\tau_i$ is the $i^{th}$ trajectory, $\tau_i = \{x_1^i, a_1^i, ..., x_{T_i}^i, a_{T_i}^i\}$, where $x_n^i$ is the $n^{th}$ state and $a_n^i$ is the $n^{th}$ action from a total of $T_i$ state action pairs; and
$z$ is an embedding.

Accordingly, the method may comprise minimizing the above function with respect to $\theta$ and maximizing the above function with respect to $\psi$.

Updating the set of discriminator parameters may utilize a gradient ascent method with gradient:

$$\nabla_{\psi} \left\{ \frac{1}{n} \sum_{j=1}^{n} \left[ \frac{1}{T_j} \sum_{t=1}^{T_j} \log D_{\psi}(x_t^j, a_t^j|z_j) \right] + \left[ \frac{1}{\hat{T}_j} \sum_{t=1}^{\hat{T}_j} \log(1 - D_{\psi}(\hat{x}_t^j, \hat{a}_t^j|z_j)) \right] \right\}$$

wherein:

$D_{\psi}$ is the discriminator function;
$\psi$ is the set of discriminator parameters;
$\theta$ is the set of parameters for the neural network;
each trajectory, $\tau_j$, of the set of trajectories is $\tau_j = \{x_1^j, a_1^j, ..., x_{T_j}^j, a_{T_j}^j\}$, where $x_n^j$ is the $n^{th}$ state and $a_n^j$ is the $n^{th}$ action from a total of $T_j$ state action pairs;
each imitation trajectory, $\hat{\tau}_j$, is $\hat{\tau}_j = \{\hat{x}_1^j, \hat{a}_1^j, ..., \hat{x}_{\hat{T}_j}^j, \hat{a}_{\hat{T}_j}^j\}$, where $\hat{x}_n^j$ is the $n^{th}$ imitation state and $\hat{a}_n^j$ is the $n^{th}$ imitation action from a total of $\hat{T}_j$ imitation state action pairs; and
$z_j$ is the embedding of the trajectory $\tau j$.

By updating the discriminant parameters via the above method, the updated discriminator may be utilized to determine improved neural network parameters.

Obtaining the encoder may comprise training a variational auto encoder based on the set of trajectories, wherein the encoder forms part of the variational auto encoder. Accordingly, whilst a pre-trained encoder may be utilized, the method may also include training the encoder based on a training set of trajectories. This may be achieved by training a variational auto encoder. Variational auto encoders generally include an encoder for producing a set of latent variables from a set of training trajectories, and the decoder for decoding the latent variables to produce imitation trajectories.

The variational auto encoder may further comprise a state decoder for decoding the embeddings to produce imitation states and an action decoder for decoding the embeddings to produce imitation actions. The imitation states and imitation actions combine as state action pairs to form imitation trajectories.

The action decoder may be a multilayer perceptron and the state decoder may be an autoregressive neural network, such as a wavenet.

The policy may be based on the action decoder. This allows the training of the neural network to be bootstrapped on the back of the action decoder that has already been trained on the trajectories. Initially, the policy may incorporate weights taken from the action decoder. Having said this, taking weights directly from the action decoder can lead to poor performance initially and destroy behavior present in the action decoder due to noise injected into the policy.

Advantageously the policy $\pi_\theta$ may be:

$$\pi_\theta(\cdot | x, z) = \mathcal{N}(\cdot | \mu_\theta(x, z) + \mu_\alpha(x, z), \sigma_\theta(x, z))$$

wherein:

$x$ is a state from the trajectory;
$z$ is the embedding calculated by applying the encoder to the trajectory;
$\mu_\theta$ is a mean output from the neural network;
$\mu_\alpha$ is the mean of the output of the action decoder; and
$\sigma_\theta$ is a variance of output of the neural network.

This provides improved performance and helps avoid issues caused by noise.

Weights of the action decoder may be kept constant after the action decoder has been determined. By freezing the weights of the action decoder, deterioration of the action decoder can be prevented.

The encoder may be a bi-directional long short term memory encoder.

In general, one innovative aspect of the subject matter described in this specification can be embodied in a system comprising one or more computers and one or more storage devices storing instructions that when executed by the one or more computers cause the one or more computers to perform the operations of the respective method of any one of the methods described herein.

In general, one innovative aspect of the subject matter described in this specification can be embodied in one or more computer storage media storing instructions that when executed by one or more computers cause the one or more computers to perform the operations of the respective method of any one of the methods described herein.

Once the neural network has been trained, it may be used to determine actions in response to input states. This may be used to control an agent such as a robot, an autonomous vehicle, or a computer avatar. Whilst the implementations described herein discuss determining actions that correspond to specific input states, interpolated actions may also be generated. Interpolated actions may be based on an interpolated state (a state formed by interpolating two input states) or an interpolated embedding (an embedding formed by interpolating between two embeddings of two corresponding states).

The subject matter described in this specification can be implemented in particular embodiments so as to realize one or more of the following advantages. The methods can be used to more efficiently and effectively train a neural network. For example by utilizing an encoder to train the neural network, the resulting neural network is better able to imitate the behavior of a smaller number of training trajectories in a robust manner over a wider range of behaviors. As a smaller number of training trajectories is required, the neural network can learn more quickly from observed actions, whilst also avoiding errors usually associated when small training sets are used. Accordingly, the resulting neural network is more robust and displays an increased diversity in behavior. Utilizing a smaller set of training trajectories means that a smaller number of computations is required, therefore the methods described herein display improved computational efficiency.

The details of one or more embodiments of the subject matter of this specification are set forth in the accompanying drawings and the description below.

BRIEF DESCRIPTION OF THE DRAWINGS

FIG. 1 shows an example reinforcement learning system.
FIG. 2 is a flow diagram of an example process for training a neural network used to select actions to be performed by an agent interacting with an environment.
FIG. 3 shows a state encoder and a state and action decoder according to an implementation.
FIG. 4 shows a flow diagram of an example process for training a neural network using embedded trajectories.

Like reference numbers and designations in the various drawings indicate like elements.

DETAILED DESCRIPTION

This specification generally describes a reinforcement learning system implemented as computer programs on one or more computers in one or more locations that selects actions to be performed by a reinforcement learning agent interacting with an environment by using a neural network. This specification also describes how such a system can adjust the parameters of the neural network.

The system has an advantage that an agent such as a robot, or autonomous or semi-autonomous vehicle can improve its interaction with a real-world environment. It can enable for example the accomplishment of a specific task or improvement of navigation through or interaction with the real-world environment.

Some implementations of the system address the problem of assigning credit for an outcome to a sequence of decisions which led to the outcome. More particularly they aim to improve the estimation of the value of a state given a subsequent sequence of rewards, and hence improve the speed of learning and final performance level achieved. They also reduce the need for hyperparameter fine tuning, and hence are better able to operate across a range of different problem domains.

In accordance with the claimed invention, the environment is a real-world environment and the agent is a mechanical agent interacting with the real-world environment. For example, the agent may be a robot interacting with the environment to accomplish a specific task. As another example, the agent may be an autonomous or semi-autonomous vehicle navigating through the environment. In these cases, the observation can be data captured by one or more sensors of the mechanical agent as it interacts with the environment, e.g., a camera, a LIDAR sensor, a temperature sensor, and so on.

Continuous control via deep reinforcement learning has made much progress in the last few years with several impressive demonstrations of how sophisticated motor skills can be learned from scratch or from demonstrations in simulation and, to some extent, on real robots.

Yet, the flexibility and agility of animals remains unmatched. One hallmark of biological motor control is that animals are able to recruit a large variety of different movements as required by the circumstances. Imagine a football player in action: she will run forward or backwards, at different speeds, perform quick turns, dribble the ball, feint the goal keeper and finally kick the ball into the goal. Building versatile embodied agents, both in the form of real robots and in the form of animated avatars, capable of a wide and diverse set of behaviors is one of the long-standing challenges of AI.

Behavioral cloning (BC) is a training method in which the actions of an agent mimicked. Given a set of demonstration trajectories $(\tau_i)_i$ where the $i$-th trajectory of state-action pairs is $\tau_i = \left\{ x_1^i, a_1^i, ..., x_{T_i}^i, a_{T_i}^i \right\}$, behavioral cloning seeks apply Maximum Likelihood to imitate the actions. In the $i^{th}$ trajectory, $\{\tau_i\}_i$:

$x_n^i$ is the $n^{th}$ state,

$a_n^i$ is the $n^{th}$ action,

$T_i$ is the number of state-action pairs.

When demonstration data is abundant, BC can be effective; however, without an abundance of data, BC can often fail. The inefficiencies of BC stem from the sequential nature of the problem. When using BC, even the slightest errors in mimicking the demonstration behavior can quickly accumulate as the policy is unrolled. A good policy should correct for the mistakes made previously. For BC to learn good corrective policies, there have to be enough corresponding behaviors in the demonstrations. Unfortunately, corrective behaviors are often rare in demonstration trajectories, thus making the learning of good corrective policies difficult.

From a learning perspective the goal of endowing an agent with a diverse set of behaviors therefore poses several challenges as it often requires the acquisition of the behaviors in the first place. The methods described herein seek to overcome this problem.

The starting point is the assumption that a moderate number of demonstrations of a variety of different behaviors is available in the form of state-action sequences, or simply sequences of states. The goal is to learn a control policy that can be conditioned on a behavior embedding vector and, when conditioned appropriately, reproduce any behavior from the original set, and, at least to some extent, interpolate between them.

By training the system based on embeddings (latent variables) determined via an encoder, the resulting system is better able to imitate the behavior of the set of trajectories in a robust manner over a wider range of behaviors. As a wider range of behaviors are modelled by the neural network, a smaller number of training trajectories are required to train the neural network, therefore providing a more efficient training method. Furthermore, this method allows for one-shot learning.

In addition, instead of pre-defining the behavior embedding space, some implementations described herein allow this behavior to emerge by training a control policy jointly with the encoder that maps a demonstration trajectory onto an embedding vector. The policy is then trained to approximately reproduce the trajectory. Besides being a vehicle for learning a suitable embedding space the encoder can subsequently serve to perform one-shot imitation of a given test trajectory.

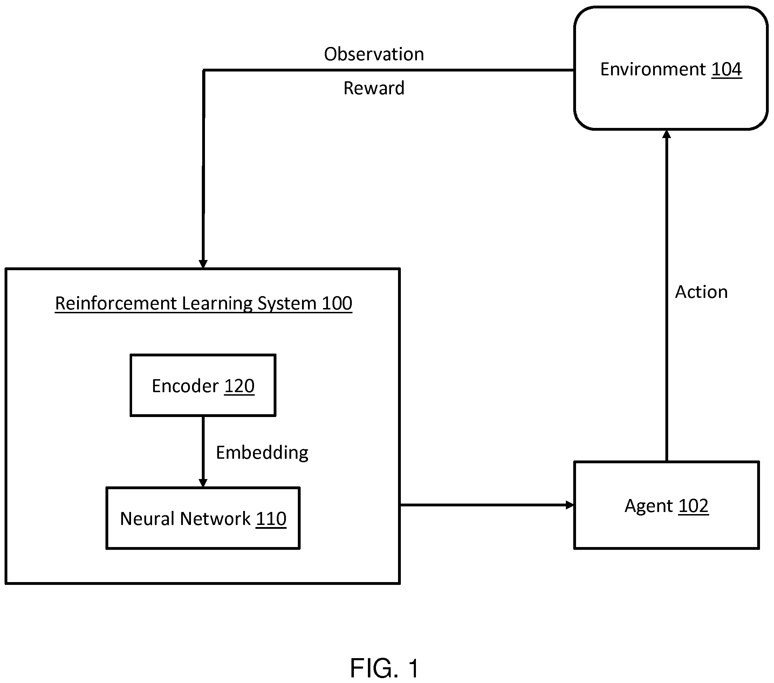

FIG. 1 shows an example reinforcement learning system 100. The reinforcement learning system 100 is an example of a system implemented as computer programs on one or more computers in one or more locations in which the systems, components, and techniques described below are implemented.

The reinforcement learning system 100 selects actions to be performed by a reinforcement learning agent 102 interacting with an environment 104. That is, the reinforcement learning system 100 receives observations, with each observation characterizing a respective state of the environment 104, and, in response to each observation, selects an action from an action space to be performed by the reinforcement learning agent 102 in response to the observation. The reinforcement learning system 100 then instructs or otherwise causes the agent 102 to perform the selected action.

After the agent 102 performs a selected action, the environment 104 transitions to a new state and the system 100 receives another observation characterizing the next state of the environment 104 and a reward. The reward can be a numeric value that is received by the system 100 or the agent 102 from the environment 104 as a result of the agent 102 performing the selected action. That is, the reward received by the system 100 generally varies depending on the result of the transition of states caused by the agent 102 performing the selected action. For example, a transition into a state that is closer to completing the task being performed by the agent 102 may result in a higher reward being received by the system 100 than a transition into a state that is farther from completing the task being performed by the agent 102.

In particular, to select an action, the reinforcement learning system 100 includes a neural network 110 and an encoder 120. The encoder 120 generates an embedding for each received action and provides each embedding to the neural network 110. Each embedding describes the corresponding action via a set of latent variables. Generally, the neural network 110 is a neural network that is configured to receive an embedding of an observation and to process the embedding to generate an output that defines the action that should be performed by the agent in response to the observation.

In some implementations, the neural network 110 is a neural network that receives an embedded observation and an action and outputs a probability that represents a probability that the action is the one that maximizes the chances of the agent completing the task.

In some implementations, the neural network 110 is a neural network that receives an embedded observation and generates an output that defines a probability distribution over possible actions, with the probability for each action being the probability that the action is the one that maximizes the chances of the agent completing the task.

In some other implementations, the neural network 110 is a neural network that is configured to receive an embedding of an observation and an action performed by the agent in response to the observation, i.e., an observation-action pair, and to generate a Q-value for the observation-action pair that represents an estimated return resulting from the agent performing the action in response the observation in the observation-action pair. The neural network 110 can repeatedly perform the process, e.g. by repeatedly generating Q-values for observation-action pairs. The system 100 can then use the generated Q-values to determine an action for the agent to perform in response to a given observation.

To allow the agent 102 to effectively interact with the environment, the reinforcement learning system 100 jointly trains the neural network 110 and the encoder 120 to determine trained values of the parameters of the neural network 110 and the trained encoder 120.

After the agent 102 has performed an action in response to a given observation and a reward has been received by the system 100 as a result of the agent performing the action, the system trains the neural network 110 based on the observation and reward.

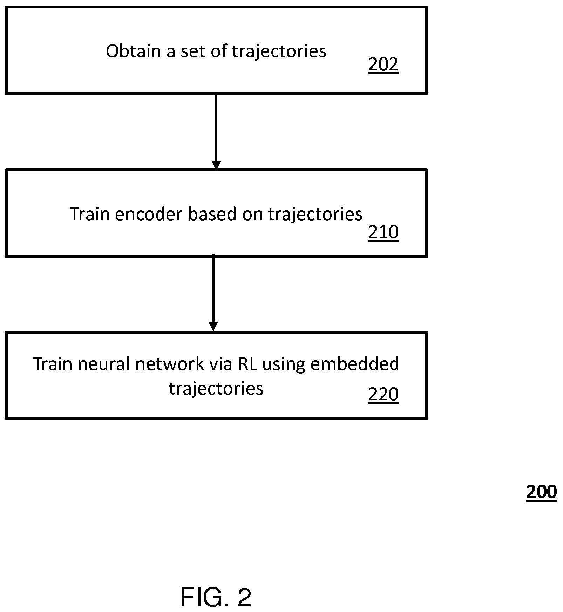

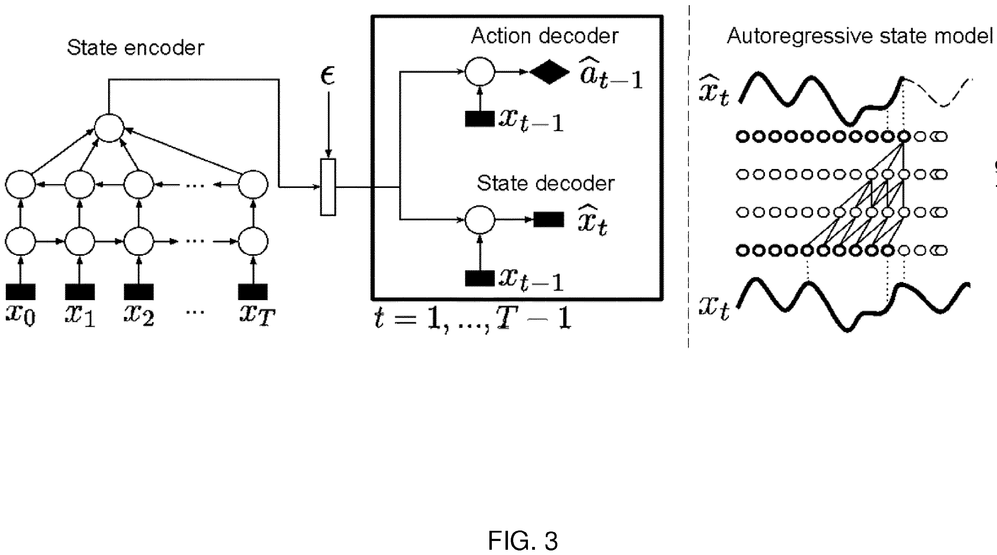

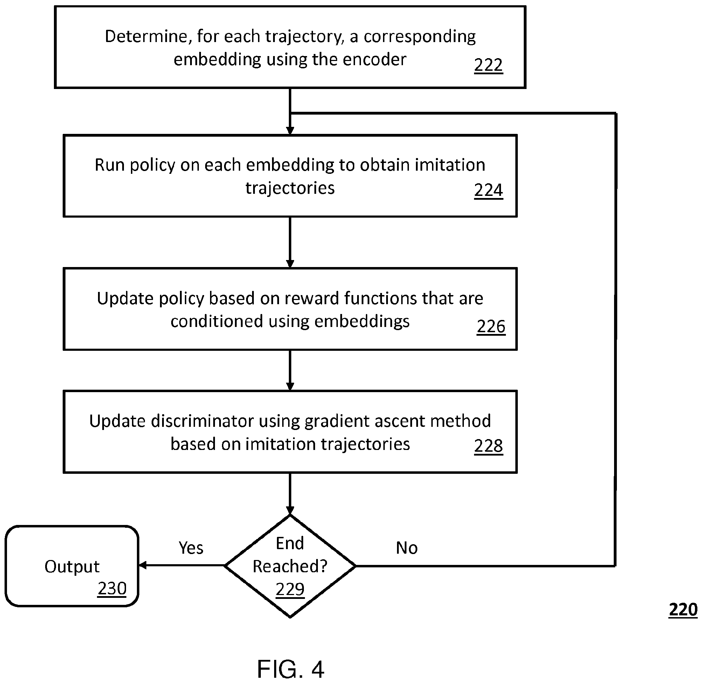

Training the reinforcement learning system 100 is described in more detail below with reference to FIG. 2. Training the encoder 120 is described in more detail below with reference to FIG. 3. Training the neural network 110 is described in more detail below with reference to FIG. 4.

FIG. 2 shows a flow diagram of an example process for training a reinforcement learning system to select actions to be performed by an agent interacting with an environment. For convenience, the process 200 will be described as being performed by a system of one or more computers located in one or more locations. For example, a reinforcement learning system, e.g., the reinforcement learning system 100 of FIG. 1, appropriately programmed in accordance with this specification, can perform the process 200.

The goal of the training is to learn a single policy that is capable of mimicking a diverse set of behaviors, even when there is not enough data for traditional methods to work well. To this end, a two-stage approach is introduced. First an encoder is trained based on a set of input trajectories. Then the neural network is trained via reinforcement learning using encodings generated by the trained encoder.

The method therefore starts by obtaining a set of trajectories 202. The trajectories are training or demonstration trajectories exhibiting behavior to be imitated. Each trajectory comprises data identifying (i) a first observation characterizing a first state of the environment and (ii) a first action performed by the agent in response to the first observation. In some implementations, e.g., in implementations where the neural network is being trained using an off-policy algorithm, the system can obtain the data from a memory that stores state-action pairs generated from the agent interacting with the environment. In other implementations, e.g., in implementations where the neural network is being trained using an on-policy algorithm, the obtained data includes data that has been generated as a result of a most-recent interaction of the agent with the environment.

Next, the system trains the encoder based on the trajectories 210. In one implementation, a variational autoencoder (VAE) is utilized comprising a bi-directional long short term memory (LSTM) encoder for the demonstration trajectories and two decoders: a multilayer perceptron (MLP) for the actions and a Wavenet to predict the next state. The system is configured to pass the trajectories through the encoder to determine a distribution over embeddings z of the demonstration trajectories, then decode the trajectories to obtain imitation trajectories, and then train the system to improve the encoder and decoder performance. This supervised stage is essentially like behavioral cloning (BC) in terms of the objective being optimized, but architecturally includes an encoder which outputs stochastic embeddings to improve diversity. This shall be discussed in more detail below with reference to FIG. 3.

Next, the system trains the neural network via reinforcement learning using embedded trajectories 220. That is, the trained encoder is used to determine embeddings of each trajectory (embedded trajectories) and the neural network is trained using the embedded trajectories. While the first stage is fully supervised, the second stage is about tuning the model via reinforcement learning to increase robustness. This shall be discussed in more detail with reference to FIG. 4.

Whilst the implementation of FIG. 2 includes the training of the encoder, it should be noted that the training methods described herein would equally work by training the neural network based on embeddings generated using a pre-trained encoder. Accordingly, it is not essential for the reinforcement learning system 100 to train the encoder, as the encoder may be trained by an external system, i.e. a pretrained encoder may be provided to the reinforcement learning system 100 (e.g. loaded into memory) in advance.

## Supervised Stage of Imitation

Conventional BC without a demonstration trajectory encoder, while simple, has a number of shortcomings. It is difficult for the estimated policy to mimic the expert under minor environmental deviations. For example, suppose the expert was driving a car in the middle of the lane. If the agent trained with BC encounters itself outside the middle of the lane, it will with high probability leave the road altogether; a rather undesirable situation. In addition, there is no obvious way to harness the policies learned with conventional BC within hierarchical controllers.

To overcome this problem, an encoder can be used to encode the demonstration trajectory to form embeddings upon which the BC policy depends. This approach facilitates transfer and one-shot learning.

In the present implementation, to better regularize the latent space, stochastic variational autoencoders (VAEs) having a distribution $q(z|x_{1:T})$ are utilized. The encoder maps a demonstration trajectory to a vector. Given this vector, both the state and action trajectories can be decoded, as shown in FIG. 3. To achieve this, the system minimizes the following loss function, $\mathcal{L}(\alpha, \omega, \phi; \tau_i)$:

$$\mathcal{L}(\alpha, w, \phi; \tau_i) = -\mathbb{E}_{q_\phi(z|x^i_{1:T_i})}\left[\sum_{t=1}^{T_i}\log \pi_\alpha(a^i_t|x^i_t, z) + \log p_w(x^i_{t+1}|x^i_t, z)\right] + D_{KL}\left(q_\phi(z|x^i_{1:T_i})||p(z)\right)$$

where:

$\pi_\alpha$ represents the action decoder with parameters $\alpha$;
$p_\omega$ represents the state decoder with parameters $\omega$;
$q_\phi$ represents the encoder with parameters $\phi$;
$D_{KL}$ () is the Kullback-Leibler divergence; and

$\tau_i$ is the ith trajectory, $\tau_i = \{x^i_1, a^i_1, ..., x^i_{T_i}, a^i_{T_i}\}$, where $x^i_n$ is the $n$th state and $a^i_n$ is the $n$th action from a total of $T_i$ state action pairs.

FIG. 3 shows a state encoder and a state and action decoder according to an implementation.

The state encoder network q takes the form of a bi-directional long short term memory (LSTM) neural network. The encoder takes a set of states and generates a corresponding set of embedded states (embeddings). The encoder has two layers.

To produce the final encoding, the average of all the outputs of the second layer of the bi-directional LSTM is determined before a final linear transformation is applied to generate the mean and standard deviation of a Gaussian representing the encoding. The system then takes a sample from this Gaussian as the encoding $\varepsilon$.

During training the encoding is input into a state decoder and an action decoder to determine imitation states and imitation actions. These are then used to train the encoder, as discussed above.

The action decoder is a multi-layer perceptron (MLP), which takes both the state and the encoding as inputs and produces the parameters of a Gaussian.

The state decoder is shown on the right hand side of FIG. 3. The state decoder is similar to a conditional Wavenet. The conditioning is produced by the concatenation of the state $x_t$ and the encoding before being passed into an MLP. The remainder of the network is similar to the standard conditional Wavenet architecture. A Wavenet is a type of autoregressive convolutional neural network. Instead of Softmax outputs units, a mixture of Gaussians is used as the output of the Wavenet. Wavenets are described in A. van den Oord, S. Dieleman, H. Zen, K. Simonyan, O. Vinyals, A. Graves, N. Kalchbrenner, A. Senior, and K. Kavukcuoglu. "WaveNet: A generative model for raw audio".

The outputs of the encoder and decoders are then used in the training to find the parameters that minimize the above loss function $\mathcal{L}(\alpha, \omega, \phi; \tau_i)$.

Once trained, the parameters of the encoder can be stored for future in training the neural network 110.

It should be noted that whilst the above implementation discusses the use of a bi-directional long short term memory (LSTM) neural network, alternative forms of encoder may be used. In addition, whilst the above implementation discusses the use of a conditional Wavenet, alternative forms of state decoder may be used. Furthermore, whilst the above implementation discusses the use of a multi-layer perceptron, alternative forms of action decoder may be used.

**Control Stage of Imitation**

As discussed above, BC performs poorly without a large set of demonstrations. Even with a demonstration trajectory encoder, as in the present case, BC can result in policies that make irrecoverable failures.

To solve this problem the implementations described herein include a second stage of policy refinement with reinforcement learning, which leads to significant improvements in robustness.

To this end, the implementations described herein adapt concepts used in Generative Adversarial Imitation Learning (GAIL).

GAIL is a method that can avoid the pitfalls of BC by interacting with the environment. Specifically, GAIL constructs a reward function using Generative Adversarial Networks (GANs) to measure the similarity between the policy generated trajectories and the expert trajectories.

GANs are generative models that use two networks: a generator G and a discriminator D. The generator tries to generate samples that are indistinguishable from real data. The job of the discriminator is to tell apart the data and the samples, predicting 1 with a high probability if the sample real and 0 otherwise. More precisely, GAN optimizes the following objective function:

$$\min_{G} \max_{D} \mathbb{E}_{p_{data}(x)} \left[ \log D(x) \right] + \mathbb{E}_{p(z)} \left[ \log(1 - D(G(z))) \right]$$

GAIL is an imitation learning version of GAN that seeks to imitate expert trajectories. GAIL adopts the following objective function:

$$\min_{\theta} \max_{\psi} \mathbb{E}_{\pi_E} \left[ \log D_{\psi}(x, a) \right] + \mathbb{E}_{\pi_\theta} \left[ \log(1 - D_{\psi}(x, a)) \right]$$

where $\pi_E$ denotes the expert policy that generated the demonstration trajectories and $\pi_\theta$ denotes the policy to be trained. To avoid differentiating through the system dynamics, policy gradient algorithms, instead of backpropagation, are used to train the policy by maximizing the discounted sum rewards:

$$r_{\psi}(x_t, a_t) = -\log(1 - D_{\psi}(x_t, a_t))$$

wherein:

$r_{\psi}(x_t, a_t|z_t)$ is the reward for the trajectory $\tau = \{x_1, a_1, ..., x_{T_j}, a_{T_j}\}$;
$x_t$ is the $t^{th}$ state from a total of $T_j$ state action pairs for the trajectory;
$a_t$ is the $t^{th}$ action from a total of $T_j$ state action pairs for the trajectory; and
$D_{\psi}$ is the output of the discriminator with discriminator parameters $\psi$.

Maximizing this reward, which may differ from the expert reward, drives $\pi_\theta$ to expertlike regions of the state-action space. In practice, trust region policy optimization (TRPO) is used to stabilize the learning process.

Whilst GAIL can overcome some issues regarding BC, it has been found to be inadequate for training the system described herein. The GAIL optimizer based on policy gradients is mode seeking. It is therefore difficult to recover a diverse set of behaviors using this approach. This problem is further exacerbated by the mode collapse problem of GANs.

To solve this problem, a new approach is proposed that is capable of imitating diverse behaviors via reinforcement learning. The implementation utilized herein conditions the discriminator on encodings generated by the pre-trained encoder. Specifically, the discriminator is trained by optimizing the following objective:

$$\min_\theta \max_\psi \mathbb{E}_{\tau_i \sim \pi_E} \left\{ \mathbb{E}_{q(z|x_{1:T_i}^i)} \left[ \frac{1}{T_i} \sum_{t=1}^{T_i} \log D_\psi(x_t^i, a_t^i|z) + \mathbb{E}_{\pi_\theta} \left[ \log(1 - D_\psi(x, a|z)) \right] \right] \right\}$$

wherein:

$D_\psi$ is the discriminator function;
$\psi$ is the set of discriminator parameters;
$\pi_\theta$ is the policy of the neural network;
$\theta$ is the set of parameters for the neural network;
$\pi_E$ represents the expert policy that generated the set of training trajectories;
$q$ is the encoder;

$\tau_i$ is the $i$th trajectory, $\tau_i = \{x_1^i, a_1^i, ..., x_{T_i}^i, a_{T_i}^i\}$, where $x_n^i$ is the $n$th state and $a_n^i$ is the $n$th action from a total of $T_i$ state action pairs; and
$z$ an embedding.

Since the discriminator is conditional, the reward function $r_\psi^t(x_t, a_t|z)$ is now also conditional:

$$r_\psi^t(x_t, a_t|z) = -\log\left(1 - D_\psi(x, a|z)\right)$$

The conditioning therefore allows the generation of set of customized reward functions, each customized reward function being tailored to imitating a different trajectory. The policy gradient algorithm, though mode seeking, will not cause collapse into one particular mode due to the diversity of reward functions.

Since the system already has an action decoder from supervised training, it can be used to bootstrap the learning by RL. One possible route is to initialize the weights of the policy network to be the same as those of the action decoder. Before the policy reaches good performance, however, the noise injected into the policy for exploration (assuming that a stochastic policy gradient is used to train the policy) can lead to poor performance initially and destroy the behavior already present in the action decoder. Instead, a new policy is chosen to be:

$$\pi_\theta(\cdot|x, z) = \mathcal{N}(\cdot|\mu_\theta(x, z) + \mu_\alpha(x, z), \sigma_\theta(x, z))$$

where:

x is a state from the trajectory;
z is the embedding calculated by applying the encoder to the trajectory;
$\mu_\theta$ is a mean output from the neural network;
$\mu_\alpha$ is the mean of the output of the action decoder; and
$\sigma_\theta$ is a variance of output of the neural network.

To prevent the deterioration of the action decoder, its weights are frozen during training. That is, the weights of the action decoder are kept constant as the neural network is trained.

For policy optimization, trust region policy optimization may be adopted.

FIG. 4 shows a flow diagram of an example process for training a neural network using embedded trajectories. This process can be considered equivalent to step 220 in FIG. 2.

The process begins, as discussed with regard to FIG. 2, with the receipt of a set of trajectories and a trained encoder.

Then, for each trajectory, a corresponding embedding is determined 222. This is achieved by applying the encoder to the trajectory to obtain an embedded trajectory.

Then, policy is applied to the embedded trajectories to obtain corresponding imitation trajectories 224. That is, for each embedded trajectory, the embedded trajectory is input into the neural network, which applies the policy and outputs a corresponding imitation trajectory. If this is the first iteration of the method, then the policy is initiated as discussed above; otherwise, the previously updated policy is applied.

The policy parameters are then updated based on reward functions that are conditioned on the embeddings 226. As discussed, the policy may be updated using trust region policy optimization (TRPO). This aims to determine a set of policy parameters that improve the return from the reward function. The reward function is conditioned on the discriminator that, in turn is conditioned on the embeddings, so that a customized reward function is applied for each embedding (for each trajectory). As discussed above, the reward function is:

$$r_t^j(x_t^j, a_t^j | z_j) = -\log(1 - D_\psi(x_t^j, a_t^j | z_j))$$

wherein:

$r_t^j\left(x_t^j, a_t^j \Big| z_t^j\right)$ is the $t$th reward for the $j$th trajectory $\tau_j = \{x_1^j, a_1^j, ..., x_{T_j}^j, a_{T_j}^j\}$ ;

$x_t^j$ is the $t$th state from a total of $T_j$ state action pairs for the $j$th trajectory;

$a_t^j$ is the $t$th action from a total of $T_j$ state action pairs for the $j$th trajectory;

$z^j$ is the embedding calculated by applying the encoder q to the $j$th trajectory, $z^j \sim q\left(\cdot \Big| x_{1:T_j}^j\right)$ ; and

$D_\psi$ is the output of the discriminator.

For every trajectory, a different reward function is used, and for every state action pair within the trajectory, a different reward is determined using the corresponding reward function.

The discriminator is the updated using a gradient ascent method based on the imitation trajectories output by the neural network 228. The discriminator is also conditioned on the embeddings. The discriminator is updated by adjusting the parameters of the discriminator neural network using backpropagation of the gradient using a gradient ascent or descent method.

In the present case, the gradient is:

$$\nabla_\psi \left\{ \frac{1}{n} \sum_{j=1}^{n} \left[ \frac{1}{T_j} \sum_{t=1}^{T_j} \log D_\psi(x_t^j, a_t^j | z_j) \right] + \left[ \frac{1}{\widehat{T}_j} \sum_{t=1}^{\widehat{T}_j} \log(1 - D_\psi(\widehat{x}_t^j, \widehat{a}_t^j | z_j)) \right] \right\}$$

wherein:

$D_\psi$ is the discriminator function;

$\psi$ is the current set of discriminator parameters;

$\theta$ is the set of parameters for the neural network;

$\tau_j$ is the jth trajectory of the set of trajectories, wherein $\tau_j = \{x_1^j, a_1^j, ..., x_{T_j}^j, a_{T_j}^j\}$ , where $x_n^j$ is the $n$th state and $a_n^j$ is the $n$th action from a total of $T_j$ state action pairs;

$\widehat{\tau}_j$ is the jth imitation trajectory, wherein $\widehat{\tau}_j = \{\widehat{x}_1^j, \widehat{a}_1^j, ..., \widehat{x}_{\widehat{T}_j}^j, \widehat{a}_{\widehat{T}_j}^j\}$ , where $\widehat{x}_n^j$ is the $n$th imitation state and $\widehat{a}_n^j$ is the $n$th imitation action from a total of $\widehat{T}_j$ imitation state action pairs;

$z_j$ is the embedding of the trajectory $\tau_j$; and

$\nabla_\psi$ is the gradient with respect to $\psi$.

Once the discriminator has been updated, the system determines whether the end of the training has been reached 229. The end is reached when an end criterion has been satisfied. This might be, for instance, a predefined number of iterations of training or a predefined time for training.

If the end has not been reached, the method loops back to repeat steps 224-229 using the updated discriminator parameters and updated policy parameters. The updated policy is utilized in step 224 and the updated discriminator is applied in the reward functions used in step 226.

The method therefore repeatedly updates the policy and discriminator parameters, iteratively improving on them until the end criterion is satisfied.

Once the end has been reached, the method outputs the policy parameters 230. This output may be to memory, either local or otherwise, or via communication to another device or system. The output policy parameters may then be utilized as a trained model for imitating the behaviors indicated by the input training trajectories.

Algorithm 1 shows an example process for training a neural network using embedded trajectories.

The algorithm first receives a set of demonstration trajectories and a pre-trained encoder (e.g. trained during step 210 or input to the system).

The algorithm then, for each trajectory, determines an embedding and then runs the policy on the embedding to determine a corresponding imitation trajectory. This repeats until an embedding and an imitation trajectory has been determined for all input trajectories.

Then the policy parameters are updated via TRPO using rewards determined from the reward function conditioned on the embeddings and the discriminator parameters are updated with the gradient.

The method repeats until a maximum number of iterations or a maximum time has been reached.

---

**Algorithm 1** Control stage of diverse imitation.

**INPUT:** Demonstration trajectories $\{\tau_i\}_i$ and a pre-trained encoder $q$.

**repeat**

    **for** $j \in \{1, \cdots, n\}$ **do**

        Sample trajectory $\tau_j$ from the demonstration set and sample $z_j \sim q(\cdot | x^j_{1:T_j})$.

        Run policy $\pi_\theta(\cdot | z_j)$ to obtain the trajectory $\hat{\tau}_j$.

    **end for**

    Update policy parameters via TRPO with rewards $r^j_t(x^j_t, a^j_t | z_j) = -\log(1 - D_\psi(x^j_t, a^j_t | z_j))$.

    Update discriminator parameters from $\psi_i$ to $\psi_{i+1}$ with gradient:

$$\nabla_\psi \left\{ \frac{1}{n} \sum_{j=1}^{n} \left[ \frac{1}{T_j} \sum_{t=1}^{T_j} \log D_\psi(x^j_t, a^j_t | z_j) \right] + \left[ \frac{1}{\hat{T}_j} \sum_{t=1}^{\hat{T}_j} \log(1 - D_\psi(\tilde{x}^j_t, \tilde{a}^j_t | z_j)) \right] \right\}$$

**until** Max iteration or time reached.

---

The implementations described herein provide a means for training a neural network to imitate diverse sets of behaviors using fewer training trajectories. This means that the neural network can be trained more efficiently. Furthermore, if a large number of trajectories are used then the neural network can imitate the training behaviors more effectively.

The training methods described herein have been tested to quantify their advantages. After training, it has been found that the trained model is more capable of reproducing most training and test policies.

In addition, To assist better generalization, it would be beneficial for the encoder to encode the trajectories in a semantically meaningful way. To test whether this is indeed the case, two random training trajectories were compared and their embedding vectors were obtained using the encoder. A series of convex combinations of these embedding vectors interpolating from one to the other were produced. The action decoder was conditioned on each of these intermediary points and executed in the environment. It was shown that interpolating in the latent space indeed corresponds to interpolation in the physical dimensions. This highlights the semantic meaningfulness of the discovered latent space.

In light of the above, it can be seen that the use of the encoder provides an effective means of acquiring and compressing a broad range of diverse behaviors into a suitable representation that makes them more effective when training a neural network. By conditioning the reward function used in reinforcement learning on the embeddings, the neural network is trained more effectively and efficiently to imitate a more diverse range of behaviors.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of the invention, which is defined by the claims.

In certain circumstances, multitasking and parallel processing may be advantageous. It should be understood that the described program components and systems can generally be integrated together in a single software product or packaged into multiple software products.

Particular embodiments of the subject matter have been described. Other embodiments are within the scope of the following claims.

**Claims**

1. A computer-implemented method for training a policy generator neural network to select actions to be performed by a mechanical agent interacting with a real-world environment, the method comprising:

   obtaining data identifying a set of one or more trajectories (202), each trajectory comprising a set of observations characterizing a set of states of the environment and corresponding actions performed by another agent in response to the states, as state action pairs;
   obtaining data identifying an encoder of a trained variational autoencoder neural network, wherein the encoder is configured to process trajectories to determine probability distributions over embeddings of the trajectories;
   for each trajectory:

      passing the trajectory through the encoder to determine a probability distribution over embeddings;
      determining an embedding for the trajectory by sampling from the probability distribution encoded for the trajectory by the encoder (222);
      determining an imitation trajectory (224) by applying a policy defined by the policy generator neural network to the embedding for the trajectory; and
      determining a return from the imitation trajectory using a reward function that is conditioned on the embedding, wherein the reward function makes use of a discriminator configured to discriminate between the imitation trajectory and the trajectory, wherein the discriminator is conditioned using the embedding; and

   train the policy generator neural network using the reward function that is conditioned on the embedding, by adjusting parameters of the policy generator neural network based on the reward function that is conditioned on the embedding, to improve the return from the reward function.

2. A method according to claim 1 wherein:
   the reward function is:

$$r_t^j(x_t^j, a_t^j | z_j) = -\log(1 - D_\psi(x_t^j, a_t^j | z_j))$$

   wherein:

$r_t^j\left(x_t^j, a_t^j \middle| z_t^j\right)$ is the $t$th reward for the $j$th trajectory $\tau_j = \{x_1^j, a_1^j, \ldots, x_{T_j}^j, a_{T_j}^j\}$;

$xl_t$ is the $t$th state from a total of $T_j$ state action pairs for the $j$th trajectory;

$a_t^j$ is the $t$th action from a total of $T_j$ state action pairs for the $j$th trajectory;

$z^j$ is the embedding calculated by applying the encoder q to the $j$th trajectory, $z^j \sim q\left(\cdot \middle| x_{1:T_j}^j\right)$; and

$D_\psi$ is the output of the discriminator.

3. A method according to claim 2 further comprising updating a set of discriminator parameters based on the embeddings.

4. A method according to claim 3 wherein the method comprises iteratively:

   updating the parameters of the policy generator neural network based on the discriminator;
   updating the discriminator parameters based on each trajectory, each imitation trajectory and each embedding; and
   updating each embedding and each imitation trajectory using the updated policy generator neural network, until an end condition is met.

5. A method according to claim 3 or claim 4 wherein updating the set of discriminator parameters comprises implementing:

$$\min_\theta \max_\psi \mathbb{E}_{\tau_i \sim \pi_E}\left\{\mathbb{E}_{q(z|x_{1:T_i}^i)}\left[\frac{1}{T_i}\sum_{t=1}^{T_i}\log D_\psi(x_t^i, a_t^i|z) + \mathbb{E}_{\pi_\theta}\left[\log(1 - D_\psi(x, a|z))\right]\right]\right\}$$

   wherein:

   $D_\psi$ is the discriminator function;
   $\psi$ is the set of discriminator parameters;
   $\pi_\theta$ is the policy of the policy generator neural network;
   $\theta$ is the set of parameters for the policy generator neural network;
   $\pi_E$ represents the expert policy that generated the set of one or more trajectories;
   $q$ is the encoder;
   $\tau_i$ is the $i$th trajectory, $\tau_i = \{x_1^i, a_1^i, \ldots, x_{T_i}^i, a_{T_i}^i\}$, where $x_n^i$ is the $n$th state and $a_n^i$ is the $n$th action from a total of $T_j$ state action pairs; and
   $z$ is an embedding.

6. A method according to claim 5 wherein updating the set of discriminator parameters utilizes a gradient ascent method with gradient:

$$\nabla_\psi\left\{\frac{1}{n}\sum_{j=1}^{n}\left[\frac{1}{T_j}\sum_{t=1}^{T_j}\log D_\psi(x_t^j, a_t^j|z_j)\right] + \left[\frac{1}{\widehat{T}_j}\sum_{t=1}^{\widehat{T}_j}\log(1 - D_\psi(\widehat{x}_t^j, \widehat{a}_t^j|z_j))\right]\right\}$$

   wherein:

   $D_\psi$ is the discriminator function;
   $\psi$ is the set of discriminator parameters;
   $\theta$ is the set of parameters for the policy generator neural network;

   each trajectory, $\tau_j$, of the set of one or more trajectories is $\tau_j = \{x_1^j, a_1^j, \ldots, x_{T_j}^j, a_{T_j}^j\}$, where $x_n^j$ is the $n$th

state and $a_n^j$ is the $n$th action from a total of $T_j$ state action pairs;

each imitation trajectory, $\hat{\tau}_j$, is $\hat{\tau}_j = \{\hat{x}_1^j, \hat{a}_1^j, \ldots, \hat{x}_{\hat{T}_j}^j, \hat{a}_{\hat{T}_j}^j\}$, where $\hat{x}_n^j$ is the $n$th imitation state and $\hat{a}_n^j$ is the $n$th imitation action from a total of $\hat{T}_j$ imitation state action pairs; and

$z_j$ is the embedding of the trajectory $\tau_j$.

**7.** A method according to any preceding claim wherein obtaining the encoder comprises training the variational auto encoder based on the set of one or more trajectories.

**8.** A method according to claim 7 wherein the variational auto encoder further comprises a state decoder for decoding each embedding to produce imitation states and an action decoder for decoding each embedding to produce imitation actions.

**9.** A method according to claim 8 wherein the action decoder is a multilayer perceptron and/or wherein the state decoder is an autoregressive neural network.

**10.** A method according to claim 8 or claim 9 wherein the policy is based on the action decoder.

**11.** A method according to claim 10 wherein weights of the action decoder are kept constant after the action decoder has been determined.

**12.** A method according to any preceding claim wherein the encoder is a bi-directional long short term memory encoder.

**13.** A system comprising one or more computers and one or more storage devices storing instructions that when executed by the one or more computers cause the one or more computers to perform the method of any preceding claim

**14.** One or more computer storage media storing instructions that when executed by one or more computers cause the one or more computers to perform the method of any one of claims 1-12.

**Patentansprüche**

**1.** Computerimplementiertes
Verfahren zum Trainieren eines richtliniengenerierenden neuronalen Netzwerks, um Aktionen auszuwählen, die von einem mechanischen Agenten durchgeführt werden, der mit einer realen Umgebung interagiert, wobei das Verfahren Folgendes umfasst:

Erlangen von Daten, die einen Satz von einer oder mehreren Trajektorien (202) identifizieren, wobei jede Trajektorie einen Satz von Beobachtungen umfasst, der einen Satz von Zuständen der Umgebung und entsprechende Aktionen, die von einem anderen Agenten als Reaktion auf die Zustände durchgeführt werden, als Zustands-Aktionspaare charakterisiert;
Erlangen von Daten, die einen Codierer eines trainierten neuronalen Variations-Autocodierernetzwerks identifizieren, wobei der Codierer so konfiguriert ist, dass er Trajektorien verarbeitet, um Wahrscheinlichkeitsverteilungen über Einbettungen der Trajektorien zu bestimmen;
für jede Trajektorie:

Weiterleiten der Trajektorie durch den Codierer, um eine Wahrscheinlichkeitsverteilung über Einbettungen zu bestimmen; Bestimmen einer Einbettung für die Trajektorie durch Abtasten der Wahrscheinlichkeitsverteilung, die für die Trajektorie durch den Codierer (222) codiert wurde;
Bestimmen einer Nachahmungstrajektorie (224) durch Anwenden einer durch das richtliniengenerierende neuronale Netzwerk definierten Richtlinie auf die Einbettung für die Trajektorie; und
Bestimmen einer Rückkehr von der Nachahmungstrajektorie unter Verwendung einer Belohnungsfunktion, die durch die Einbettung bedingt ist, wobei die Belohnungsfunktion einen Diskriminator verwendet, der so konfiguriert ist, dass er zwischen der Nachahmungstrajektorie und der Trajektorie unterscheidet, wobei der Diskriminator durch die Einbettung bedingt ist; und
Trainieren des richtliniengenerierenden neuronalen Netzwerks unter Verwendung der Belohnungsfunktion, die von der Einbettung bedingt ist, durch Einstellen von Parametern des richtliniengenerierenden neuronalen Netzwerks basierend auf der Belohnungsfunktion, die von der Einbettung bedingt ist, um den Ertrag der Belohnungsfunktion zu verbessern.

2. Verfahren nach Anspruch 1, wobei:
die Belohnungsfunktion Folgende ist:

$$r_t^j\big(x_t^j, a_t^j | z_j\big) = -\log\Big(1 - D_\Psi\big(x_t^j, a_t^j | z_j\big)\Big)$$

wobei:

$r_t^j\big(x_t^j, a_t^j | z_t^j\big)$ die $t$· Belohnung für die j $^{-te}$ Trajektorie $\tau_j = \big\{x_1^j, a_1^j, ..., x_T^j, a_{T\,j}^j\big\}$ ist

$x_t^j$ der $t$· Zustand aus einer Summe von $T_j$-Zustands-Aktionspaaren für die $j$· Trajektorie ist;

$x_t^j$ die $t$· Aktion aus einer Summe von $T_j$-Zustands-Aktionspaaren für die $j$· Trajektorie ist;
$z^j$ die Einbettung berechnet durch Anwendung des Encoders q auf die j. Trajektorie ist,

$z^j \sim q\Big(\cdot \,\big| x_{1:T\,j}^j\Big)$ ; und

$D_\Psi$ die Ausgabe des Diskriminators ist.

3. Verfahren nach Anspruch 2, ferner umfassend Aktualisieren eines Satzes von Diskriminatorparametern basierend auf den Einbettungen.

4. Verfahren nach Anspruch 3, wobei das Verfahren iterativ umfasst:

Aktualisieren der Parameter des richtliniengenerierenden neuronalen Netzwerks basierend auf dem Diskriminator;
Aktualisieren der Diskriminatorparameter basierend auf jeder Trajektorie, jeder Nachahmungstrajektorie und jeder Einbettung; und
Aktualisieren jeder Einbettung und jeder Nachahmungstrajektorie unter Verwendung des aktualisierten richtliniengenerierenden neuronalen Netzwerks,
bis eine Endbedingung erfüllt ist.

5. Verfahren nach Anspruch 3 oder Anspruch 4, wobei Aktualisieren des Satzes von Diskriminatorparametern Implementieren umfasst:

$$\min_\theta \max_\psi \mathrm{E}_{T_i \sim \pi E}\left\{\mathrm{E}_{q(z|x_{1:T_i}^i)}\left[\frac{1}{T_i}\sum_{t=1}^{T_i}\log D_\Psi\big(x_t^i, a_t^i|z\big) + \mathrm{E}_{\pi\theta}\big[\log\big(1 - D_\Psi(x, a|z)\big)\big]\right]\right\}$$

wobei:

$D_\Psi$ die Diskriminatorfunktion ist;
$\psi$ der Satz von Diskriminatorparametern ist;
$\pi_\theta$ die Richtlinie des richtliniengenerierenden neuronalen Netzwerks ist;
$\theta$ der Satz von Parametern für das richtliniengenerierende neuronale Netzwerk ist;
$\pi_E$ die Expertenrichtlinie repräsentiert, die der Satz von einer oder mehreren Trajektorien erzeugt hat;
q der Encoder ist;

$\tau_j$ die $i$·Trajektorie ist, $\tau_i = \big\{x_1^i, a_1^i, ..., x_{T_i}^i, a_{T_i}^i\big\}$ wobei $x_n^i$ der $n$· Zustand ist und $a_1^i$ die $n$· Aktion von insgesamt $T_i$ Zustands-Aktionspaaren ist; und
z eine Einbettung ist.

**6.** Verfahren nach Anspruch 5, wobei Aktualisieren des Satzes von Diskriminatorparametern ein Gradientenaufstiegs-verfahren mit Gradient verwendet:

$$\nabla_\Psi \left\{ \frac{1}{n} \sum_{j=1}^{n} \left[ \frac{1}{T_j} \sum_{t=1}^{T_j} \log D_\Psi\left(x_t^j, a_t^j \middle| z_j\right) \right] + \left[ \frac{1}{\hat{T}_j} \sum_{t=1}^{\hat{T}_j} \log\left(1 - D_\Psi\left(\hat{x}_t^j, \hat{a}_t^j \middle| z_j\right)\right) \right] \right\}$$

wobei:

$D_\Psi$ die Diskriminatorfunktion ist;

$\psi$ der Satz von Diskriminatorparametern ist;

$\theta$ der Satz von Parametern für das richtliniengenerierende neuronale Netzwerk ist;

jede Trajektorie $\tau_j$ aus dem Satz von einer oder mehreren Trajektorien $\tau_j = \left\{ x_1^j, a_1^j, ..., x_{T_j}^j, a_{T_j}^j \right\}$, ist, wobei $x_n^j$ der n· Zustand und $a_n^j$ die n· Aktion aus einer Gesamtzahl von $T_j$ Zustands-Aktionspaaren ist;

jede Nachahmungstrajektorie, $\hat{\tau}_j$ ist $\hat{\tau}_j = \left\{ \hat{x}_1^j, \hat{a}_1^j, ..., \hat{x}_{\hat{T}_j}^j, \hat{a}_{\hat{T}_j}^j \right\}$, wobei $\hat{x}_n^j$ der n· Nachahmungszustand und $\hat{a}_n^i$ die n· Nachahmungsaktion aus einer Gesamtzahl von $\hat{T}_j$ Nachahmungszustand-Aktionspaaren ist; und

$z_j$ die Einbettung der Trajektorie $\tau_j$ ist.

**7.** Verfahren nach einem der vorhergehenden Ansprüche, wobei Erlangen des Codierers Trainieren des Variations-Autocodierers basierend auf dem Satz von einer oder mehreren Trajektorien umfasst.

**8.** Verfahren nach Anspruch 7, wobei der Variations-Autocodierer ferner einen Zustandsdecodierer zum Decodieren jeder Einbettung umfasst, um Imitationszustände zu produzieren, und einen Aktionsdecodierer zum Decodieren jeder Einbettung, um Imitationsmaßnahmen zu produzieren.

**9.** Verfahren nach Anspruch 8, wobei der Aktionsdecoder ein mehrlagiges Perzeptron ist und/oder wobei der Zustandsdecoder ein autoregressives neuronales Netzwerk ist.

**10.** Verfahren nach Anspruch 8 oder Anspruch 9, wobei die Richtlinie auf dem Aktionsdecoder basiert.

**11.** Verfahren nach Anspruch 10, wobei die Gewichte des Aktionsdecoders konstant gehalten werden, nachdem der Aktionsdecoder bestimmt worden ist.

**12.** Verfahren nach einem der vorhergehenden Ansprüche, wobei der Codierer ein bidirektionaler Langzeitspeicher-Codierer ist.

**13.** System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, das Verfahren nach einem vorstehenden Anspruch durchzuführen.

**14.** Ein oder mehrere Computerspeichermedien, die Anweisungen speichern, die, wenn sie von dem einen oder den mehreren Computern ausgeführt werden, den einen oder die mehreren Computer veranlassen, das Verfahren nach einem der Ansprüche 1-12 durchzuführen.

**Revendications**

**1.** Procédé mis en œuvre par ordinateur de formation d'un réseau neuronal générateur de politiques pour sélectionner des actions à réaliser par un agent mécanique interagissant avec un environnement du monde réel, le procédé comprenant :

l'obtention de données identifiant un ensemble d'une ou de plusieurs trajectoires (202), chaque trajectoire comprenant un ensemble d'observations caractérisant un ensemble d'états de l'environnement et des actions correspondantes réalisées par un autre agent en réponse aux états, sous forme de paires état-action ;

l'obtention de données identifiant un codeur d'un réseau neuronal d'autocodeur variationnel formé, dans lequel le codeur est configuré pour traiter des trajectoires afin de déterminer des distributions de probabilité sur des plongements des trajectoires ;

pour chaque trajectoire :

le fait de faire passer la trajectoire à travers le codeur pour déterminer une distribution de probabilité sur des plongements ; la détermination d'un plongement pour la trajectoire par échantillonnage à partir de la distribution de probabilité codée pour la trajectoire par le codeur (222) ;

la détermination d'une trajectoire d'imitation (224) en appliquant une politique définie par le réseau neuronal générateur de politiques au plongement de la trajectoire ; et

la détermination d'un retour à partir de la trajectoire d'imitation à l'aide d'une fonction de récompense conditionnée par le plongement, dans lequel la fonction de récompense utilise un discriminateur configuré pour faire la distinction entre la trajectoire d'imitation et la trajectoire, dans lequel le discriminateur est conditionné à l'aide du plongement ; et

former le réseau neuronal générateur de politiques à l'aide de la fonction de récompense conditionnée sur le plongement, en ajustant des paramètres du réseau neuronal générateur de politiques sur la base de la fonction de récompense conditionnée sur le plongement, pour améliorer le retour de la fonction de récompense.

2. Procédé selon la revendication 1, dans lequel :
la fonction de récompense est :

$$r_t^j\left(x_t^j, a_t^j | z_j\right) = -\log\left(1 - D_\psi\left(x_t^j, a_t^j | z_j\right)\right)$$

où :

$r_t^j\left(x_t^j, a_t^j | z_t^j\right)$ est la $t^{\text{ième}}$ récompense pour la $j^{\text{ième}}$ trajectoire $\tau_j = \left\{x_1^j, a_1^j, ..., x_{Tj}^j, a_{Tj}^j\right\}$

$x_t^j$ est le $t^{\text{ième}}$ état parmi un total de $T_j$ paires état-action pour la $j^{\text{ième}}$ trajectoire ;

$a_t^j$ est la $t^{\text{ième}}$ action parmi un total de $T_j$ paires état-action pour la $j^{\text{ième}}$ trajectoire ;

$z^j$ est le plongement calculé en appliquant le codeur q à la $j^{\text{ième}}$ trajectoire,

$z^j \sim q\left(\cdot \left| x_{1:T_j}^j\right.\right)$ ; et

$D_\psi$ est la sortie du discriminateur.

3. Procédé selon la revendication 2 comprenant également la mise à jour d'un ensemble de paramètres de discriminateur sur la base des plongements.

4. Procédé selon la revendication 3, dans lequel le procédé comprend de manière itérative :

la mise à jour des paramètres du réseau neuronal générateur de politiques sur la base du discriminateur ;

la mise à jour des paramètres de discriminateur sur la base de chaque trajectoire, de chaque trajectoire d'imitation et de chaque plongement ; et

la mise à jour de chaque plongement et de chaque trajectoire d'imitation à l'aide du réseau neuronal générateur de politiques mis à jour,

jusqu'à ce qu'une condition de fin soit remplie.

5. Procédé selon la revendication 3 ou la revendication 4, dans lequel la mise à jour de l'ensemble de paramètres de discriminateur comprend la mise en oeuvre :

$$\min_{\theta} \max_{\psi} \mathrm{E}_{Ti \sim \pi E} \left\{ \mathrm{E}_{q\left(z|x_{1:T_i}^i\right)} \left[ \frac{1}{T_i} \sum_{t=1}^{T_i} \log D_{\psi}\left(x_t^i, a_t^i|z\right) + \mathrm{E}_{\pi\theta}\left[\log\left(1 - D_{\psi}(x,a|z)\right)\right] \right] \right\}$$

où :

$D_{\psi}$ est la fonction de discriminateur ;

$\psi$ est l'ensemble de paramètres de discriminateur ;

$\pi_{\theta}$ est la politique du réseau neuronal générateur de politiques ;

$\theta$ est l'ensemble de paramètres du réseau neuronal générateur de politiques ;

$\pi_E$ représente la politique experte qui a généré l'ensemble d'une ou de plusieurs trajectoires ;

q est le codeur ;

$\tau_i$ est la $i$ème trajectoire, $\tau_i = \left\{x_1^i, a_1^i, ..., x_{T_i}^i, a_{T_i}^i\right\}$ où $x_n^i$ est le $n$ème état et a^est la $n$ème action parmi un total de $T_i$ paires état-action ; et

z est un plongement.

**6.** Procédé selon la revendication 5, dans lequel la mise à jour de l'ensemble de paramètres de discriminateur utilise une méthode de montée de gradient avec un gradient :

$$\nabla_{\psi} \left\{ \frac{1}{n} \sum_{j=1}^{n} \left[ \frac{1}{T_j} \sum_{t=1}^{T_j} \log D_{\psi}\left(x_t^j, a_t^j|z_j\right) \right] + \left[ \frac{1}{\hat{T}_j} \sum_{t=1}^{\hat{T}_j} \log\left(1 - D_{\psi}\left(\hat{x}_t^j, \hat{a}_t^j|z_j\right)\right) \right] \right\}$$

où :

$D_{\psi}$ est la fonction de discriminateur ;

$\psi$ est l'ensemble de paramètres de discriminateur ;

$\theta$ est l'ensemble de paramètres du réseau neuronal générateur de politiques ;

chaque trajectoire, $\tau_j$, de l'ensemble d'une ou de plusieurs trajectoires est $\tau_j = \left\{x_1^j, a_1^j, ..., x_{T_j}^j, a_{T_j}^j\right\}$, où $x_n^j$ est le $n$ème état et $a_n^j$ est la $n$ème action d'un total de $T_j$ paires état-action ;

chaque trajectoire d'imitation, $\hat{\tau}_j$, est $\hat{\tau}_j = \left\{\hat{x}_1^j, \hat{a}_1^j, ..., \hat{x}_{\hat{T}_j}^j, \hat{a}_{\hat{T}_j}^j\right\}$, où $\hat{x}_n^j$ est le $n$ème état d'imitation et $\hat{a}_n^j$ est la $n$ème action d'imitation parmi un total de $\hat{T}_j$ paires état-action d'imitation ; et

$z_j$ est le plongement de la trajectoire τj.

**7.** Procédé selon une quelconque revendication précédente, dans lequel l'obtention du codeur comprend la formation de l'autocodeur variationnel sur la base de l'ensemble d'une ou de plusieurs trajectoires.

**8.** Procédé selon la revendication 7, dans lequel l'autocodeur variationnel comprend également un décodeur d'état pour décoder chaque plongement afin de produire des états d'imitation et un décodeur d'action pour décoder chaque plongement afin de produire des actions d'imitation.

**9.** Procédé selon la revendication 8 dans lequel le décodeur d'action est un perceptron multicouche et/ou dans lequel le décodeur d'état est un réseau neuronal autorégressif.

**10.** Procédé selon la revendication 8 ou la revendication 9, dans lequel la politique est basée sur le décodeur d'action.

**11.** Procédé selon la revendication 10, dans lequel des poids du décodeur d'action sont maintenus constants après que le décodeur d'action a été déterminé.

**12.** Procédé selon une quelconque revendication précédente, dans lequel le codeur est un codeur à mémoire à court-long terme bidirectionnel.

13. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé selon une quelconque revendication précédente.

14. Un ou plusieurs supports de stockage informatiques stockant des instructions qui, lorsqu'elles sont exécutées par un ou plusieurs ordinateurs, amènent les un ou plusieurs ordinateurs à réaliser le procédé selon l'une quelconque des revendications 1 à 12.

FIG. 1

EP 3 596 661 B1

```
┌─────────────────────────────────────────────┐
│                                             │
│        Obtain a set of trajectories         │
│                                  202        │
│                                             │
└─────────────────────────────────────────────┘
                      │
                      ▼
┌─────────────────────────────────────────────┐
│                                             │
│       Train encoder based on trajectories   │
│                                  210        │
│                                             │
└─────────────────────────────────────────────┘
                      │
                      ▼
┌─────────────────────────────────────────────┐
│                                             │
│   Train neural network via RL using embedded│
│                  trajectories               │
│                                  220        │
└─────────────────────────────────────────────┘
```

**200**

FIG. 2

State encoder

Action decoder

$\widehat{a}_{t-1}$

$x_{t-1}$

State decoder

$\widehat{x}_t$

$x_{t-1}$

$t = 1, ..., T-1$

$x_0 \quad x_1 \quad x_2 \quad \cdots \quad x_T$

$\epsilon$

Autoregressive state model

$\widehat{x}_t$

$x_t$

FIG. 3

EP 3 596 661 B1

EP 3 596 661 B1

```
┌─────────────────────────────────────────────┐
│   Determine, for each trajectory, a           │
│   corresponding embedding using the encoder   │
│                                        222     │
└─────────────────────────────────────────────┘
                       │
                       ▼
┌─────────────────────────────────────────────┐
│   Run policy on each embedding to obtain      │
│   imitation trajectories              224      │
└─────────────────────────────────────────────┘
                       │
                       ▼
┌─────────────────────────────────────────────┐
│   Update policy based on reward functions     │
│   that are conditioned using embeddings  226  │
└─────────────────────────────────────────────┘
                       │
                       ▼
┌─────────────────────────────────────────────┐
│   Update discriminator using gradient ascent  │
│   method based on imitation trajectories  228 │
└─────────────────────────────────────────────┘
```

Output 230 ◄── Yes ── End Reached? 229 ── No

220

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUNZHU LI et al.** *Inferring The Latent Structure of Human Decision-Making from Raw Visual Inputs*, 26 March 2017, https://arxiv.org/abs/1703.08840v1

- **JONATHAN HO ; STEFANO ERMON**. *Generative Adversarial Imitation Learning*, 10 June 2016, https://arxiv.org/abs/1606.03476
- **JONATHAN HO et al.** *Model-Free Imitation Learning with Policy Optimization*, 26 May 2016, https://arxiv.org/abs/1605.08478